# EUROPEAN PATENT SPECIFICATION

(11) **EP 2 146 349 B1**
(45) Date of publication and mention of the grant of the patent: **01.10.2014**
(21) Application number: 09164969.9
(22) Date of filing: 08.07.2009
(51) Int. Cl.: G21C 3/30, G21C 3/33, G21C 7/10, G21C 17/022, G21C 21/02, G21C 3/356

(54) **Nuclear reactor components including material layers to reduce enhanced corrosion on zirconium alloys used in fuel assemblies and methods thereof**
Atomreaktorkomponenten, die Materialschichten beinhalten, um die gesteigerte Korrosion auf Zirkoniumlegierungen zu verringern, die in Brennstoffeinheiten verwendet werden, und zugehörige Verfahren
Composants de réacteur nucléaire incluant des couches de matériaux pour réduire la corrosion augmentée sur les alliages de zirconium utilisés dans les assemblages de combustible et procédés associés

(30) Priority: 17.07.2008 US 219212
(43) Date of publication of application: 20.01.2010
(73) Proprietor: General Electric Company, Schenectady, NY 12345 (US)
(72) Inventor: Lutz, Daniel Reese, Sunol, CA 94586 (US); Kim, Young Jin, Schenectady, NY 12309 (US); Lin, Yang-Pi, Wilmington, NC 28405 (US)
(74) Representative: Szary, Anne Catherine

(56) References cited:
- EP-A1- 0 986 069
- WO-A1-99/60576
- DE-A1- 19 944 509
- JP-A- 61 279 675
- JP-A- H11 183 223
- US-A1- 2006 045 232

## Description

### BACKGROUND

Example embodiments generally relate to nuclear reactors including components that have reduced shadow corrosion on zirconium alloys and methods thereof.

Generally, nuclear power plants include a reactor core having fuel arranged therein to produce power by nuclear fission. A common design in nuclear power plants is to arrange fuel in a plurality of fuel rods bound together as a fuel assembly, or fuel bundle, placed within the reactor core. These fuel rods typically include several elements joining the fuel rods to assembly components at various axial locations throughout the assembly.

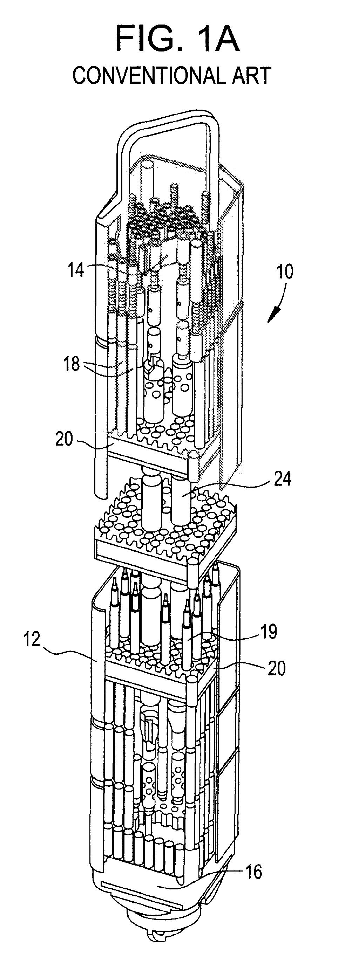

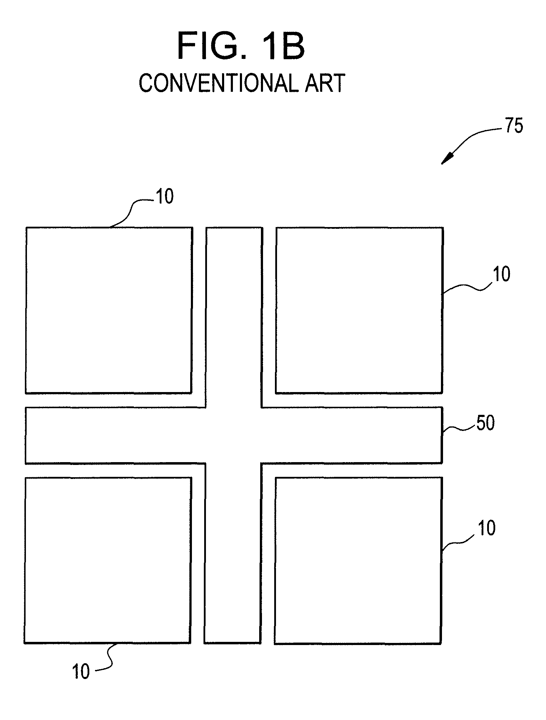

As shown in FIG. 1A, a conventional fuel bundle 10 of a nuclear reactor, such as a BWR, may include an outer channel 12 surrounding an upper tie plate 14 and a lower tie plate 16. A plurality of full-length fuel rods 18 and/or partial length fuel rods 19 may be arranged in a matrix within the fuel bundle 10 and pass through a plurality of spacers 20. Fuel rods 18 and 19 generally originate and terminate at upper and lower tie plates 14 and 16, continuously running the length of the fuel bundle 10, with the exception of partial length rods 19, which all terminate at a lower vertical position from the full length rods 18. FIG. 1B illustrates a conventional BWR 75, including four fuel assemblies 10 and a control blade 15.

Corrosion is commonly observed on e.g., channel 12 made of Zircaloys when, for example, a control blade 15, constructed with a stainless steel outer casing, is placed close to the channel 12. Zircaloys are well known high zirconium alloys commonly used in nuclear reactors. Corrosion may also be found on Zircaloy fuel cladding in contact with or close to nuclear components made from nickel and/or iron based alloys, e.g., a spacer 20 or spacer spring (not shown). The corrosion, also known as "shadow" corrosion, weakens the Zircaloy components and decreases the components useful lifespan.

In order to mitigate "shadow" corrosion, protective coatings are known from patent documents US 2006/0045232 A1, EP 0 986 069, and WO 99/60576 A1. These coating layers are formed on structural elements which are located adjacent to components made of Zircaloy and reduce the difference in the electrochemical corrosion potential of these elements.

### SUMMARY

Example embodiments are directed to providing a thin, adherent coating on the surfaces of nuclear reactor components that are known to cause increased corrosion on adjacent zirconium alloy structures and methods of reducing the increased corrosion. Example embodiments include coatings structurally bonded to components such that the difference in the corrosion potential between a coated component and a zirconium alloy component is less than that between a component without the coating and the zirconium alloy component.

Example embodiments include nuclear reactors comprising a first component formed of at least one material selected from nickel based alloys and iron based alloys, and a second component adjacent to the first component. The second component is formed of a zirconium alloy. A material layer is formed on at least one surface of the first component. The material layer is formed of a different material than the first component such that a difference in electrochemical corrosion potential between the first component and the second component is reduced, wherein the material layer is selected from one of titanium, zirconium, hafnium, yttrium, scandium, alloys thereof, and oxides thereof. A buffer layer is formed between the at least one surface of the first component and the material layer, the buffer layer including at least one of tantalum, tantalum oxide, and tantalum alloys.

Example embodiments also include methods of enhancing zirconium corrosion resistance in a nuclear reactor fuel assembly by forming a material layer on at least one surface of a first component adjacent to a second component, such that a difference in electrochemical potential between the first component and the second component is reduced. The material layer is selected from one of titanium, zirconium, hafnium, yttrium, scandium, alloys thereof, and oxides thereof. A buffer layer is formed between the at least one surface of the first component and the material layer, wherein the buffer layer includes at least one of tantalum, tantalum oxide, and tantalum alloys.

### BRIEF DESCRIPTIONS OF THE DRAWINGS

Example embodiments will become more apparent by describing, in detail, the attached drawings, wherein like elements are represented by like reference numerals, which are given by way of illustration only and thus do not limit the example embodiments herein.
FIG. 1A is an illustration of a conventional art fuel assembly.
FIG. 1B is an illustration of a conventional BWR including four fuel assemblies and a control blade.
FIG. 2A is a cross section of a surface of a nuclear reactor component having a thin material layer thereon.
FIG. 2B is a cross section of a surface of a nuclear reactor component having a thin material layer and a buffer layer thereon according to example embodiments.
FIG. 3 is a graph of electrochemical corrosion potential vs. oxygen concentration for 304 SS, Zircaloy-2, and pure zirconium.
FIG. 4 is a graph of electrochemical corrosion potential vs. immersion time of a Zircaloy-2 coated 304 SS electrode.
FIG. 5 is a graph illustrating the results of an experiment showing a comparison of corrosion potential vs. immersion time of TiO₂ coated Fe-Cr-Ni alloy and zirconium alloy using UV to simulate the radiation experienced during nuclear processing.

### DETAILED DESCRIPTION OF EXAMPLE EMBODIMENTS

Various example embodiments will now be described more fully with reference to the accompanying drawings in which some example embodiments are illustrated. In the drawings, the thicknesses of layers and regions may be exaggerated for clarity.

Detailed illustrative embodiments are disclosed herein. However, specific structural and functional details disclosed herein are merely representative for purposes of describing example embodiments. This invention may, however, be embodied in many alternate forms within the scope of the appended claims and should not be construed as limited to only example embodiments set forth herein.

Accordingly, while example embodiments are capable of various modifications and alternative forms, embodiments thereof are shown by way of example in the drawings and will herein be described in detail. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e*.*g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the scope of example embodiments.

Spatially relative terms, e.g. "beneath," "below," "lower," "above," "upper" and the like, may be used herein for ease of description to describe one element or a relationship between a feature and another element or feature as illustrated in the figures. It will be understood that the spatially relative terms are intended to encompass different orientations of the device in use or operation in addition to the orientation depicted in the Figures. For example, if the device in the figures is turned over, elements described as "below" or "beneath" other elements or features would then be oriented "above" the other elements or features. Thus, for example, the term "below" can encompass both an orientation which is above as well as below. The device may be otherwise oriented (rotated 90 degrees or viewed or referenced at other orientations) and the spatially relative descriptors used herein should be interpreted accordingly.

Example embodiments are described herein with reference to cross-sectional illustrations that are schematic illustrations of idealized embodiments (and intermediate structures). As such, variations from the shapes of the illustrations as a result, for example, of manufacturing techniques and/or tolerances, may be expected. Thus, example embodiments should not be construed as limited to the particular shapes of regions illustrated herein but may include deviations in shapes that result, for example, from manufacturing. For example, an implanted region illustrated as a rectangle may have rounded or curved features and/or a gradient (*e*.*g*., of implant concentration) at its edges rather than an abrupt change from an implanted region to a non-implanted region. Likewise, a buried region formed by implantation may result in some implantation in the region between the buried region and the surface through which the implantation may take place. Thus, the regions illustrated in the figures are schematic in nature and their shapes do not necessarily illustrate the actual shape of a region of a device and do not limit the scope.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g. those defined in commonly used dictionaries, should be interpreted as having a meaning that is consistent with their meaning in the context of the relevant art and will not be interpreted in an idealized or overly formal sense unless expressly so defined herein.

In the drawings, the sizes of constitutional elements may be exaggerated for convenience of illustration.

Example embodiments are directed to reducing the shadow-forming tendency of nuclear reactor components formed of, nickel alloys (e.g., INCONEL), iron alloys (e.g., stainless steels), etc., by using a thin coating to reduce the difference in electrochemical potential between the component and any adjacent and/or nearby zirconium alloy based components to thereby reduce the formation of shadow corrosion on the zirconium alloy. The nuclear reactor components may include, parts of a fuel assembly, for example, spacers, spacer springs, tie plates, control blades, etc. The terms adjacent and nearby are to be construed broadly as including, e.g., the at least two components being directly in contact with each other, to the at least the two components being within the same reactor.

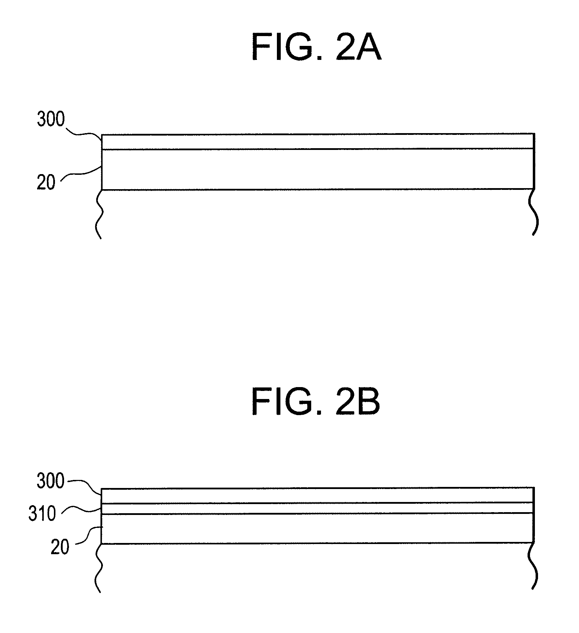

As shown in FIG. 2A, a nuclear reactor component, for example, a spacer 20 has a material layer 300 formed on a surface thereof. The material layer 300 is stable in various nuclear reactor environments, e.g., BWR reactors, and does not crack and/or spall during nuclear processing. Material layer 300 may be any material that when formed on nuclear component 20 reduces the difference between the electrochemical corrosion potential of the nuclear component 20 and at least one adjacent zirconium alloy component. Such materials for the material layer 300, may include, titanium, zirconium, hafnium, yttrium, scandium, alloys and oxides thereof, etc., (e.g., Zircaloy-2 with 0.25% iron (GNF-Ziron), High Fe-Ni Zircaloy, Zr-Sn-Fe-Cr alloy (VB)), and any other similar materials, which would be converted to an oxide by in-reactor corrosion. GNF-Ziron is further described in U.S. Patent No. 4,810,461 and VB is further described in U.S. Patent No. 5,712,888. The various oxides are effective because the oxides achieve a similar electrochemical corrosion potential as the adjacent zirconium alloy component. The adjacent zirconium alloy component may include, e.g., Zircaloy-2, Zircaoly-4, Zr-Sn alloys, Zr-Sn-Fe-Cr-Ni alloys, Zr-Nb alloys, etc.

The material layer 300 may be deposited by various well known methods. For example, material layer 300 may be formed using chemical vapor deposition (CVD), plasma vapor deposition (PVD), plasma enhanced chemical vapor deposition (PECVD), plasma thermal spraying, high-velocity oxy-fuel (HVOF) thermal spraying, wire arcing, electroless deposition, and/or electroplating. In addition, the material layer 300 may be formed using ion implantation, including, for example, at least one ion source including zirconium, titanium, hafnium, and/or scandium.

The material layer 300 may be thin, e.g., generally about 25 microns or less. By using a thin material layer 300, coolant flow through and/or around the component 20 is not significantly affected by the presence of the material layer 300.

In embodiments of the invention, as shown in FIG. 2B a buffer layer 310 is formed between the nuclear component 20 and the material layer 300. Buffer layer 310 increases the adhesion between the material layer 300 and the component 20 and is formed from tantalum, its oxides, and alloys. The buffer layer 310 may be formed using similar methods as discussed above with reference to material layer 300 and the combination of material layer 300 and buffer layer 310 may also be about 25 microns or less.

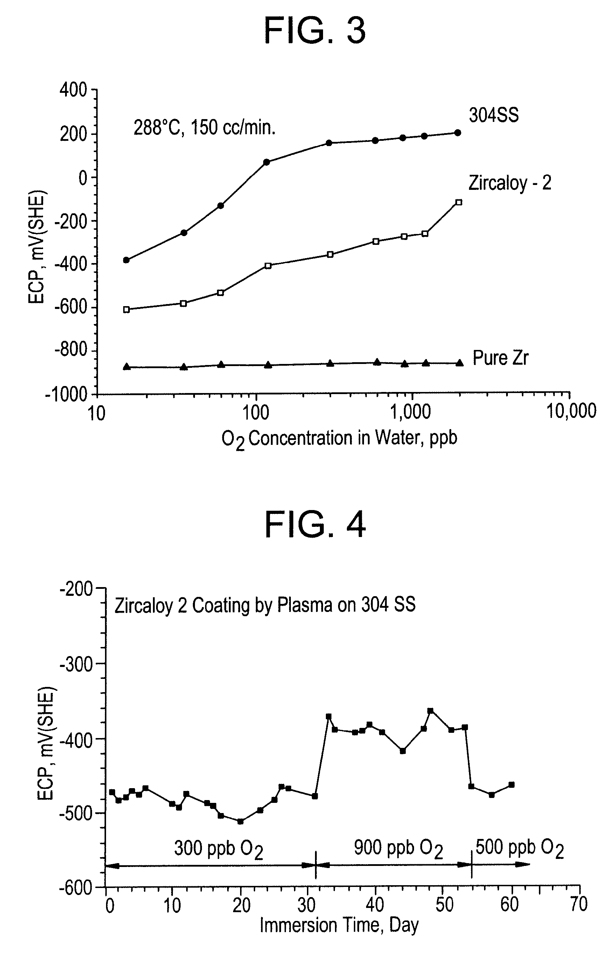

Figure 3 shows a graph of the electrochemical corrosion potential (ECP) behavior of 304 SS, Zircaloy-2 and pure Zr as a function of oxygen concentration in 288°C water. As is illustrated, pure Zr has the lowest potential, approximately -850 mV, while Zircaloy-2 is in the middle, ranging from approximately -600 to -200 mV, and 304 SS has the highest potential ranging from approximately -400 to 200 mV. Nickel-based alloys, such as INCOLNEL 600, INCONEL X750, etc., show similar ECP behavior as 304 SS in high temperature water.

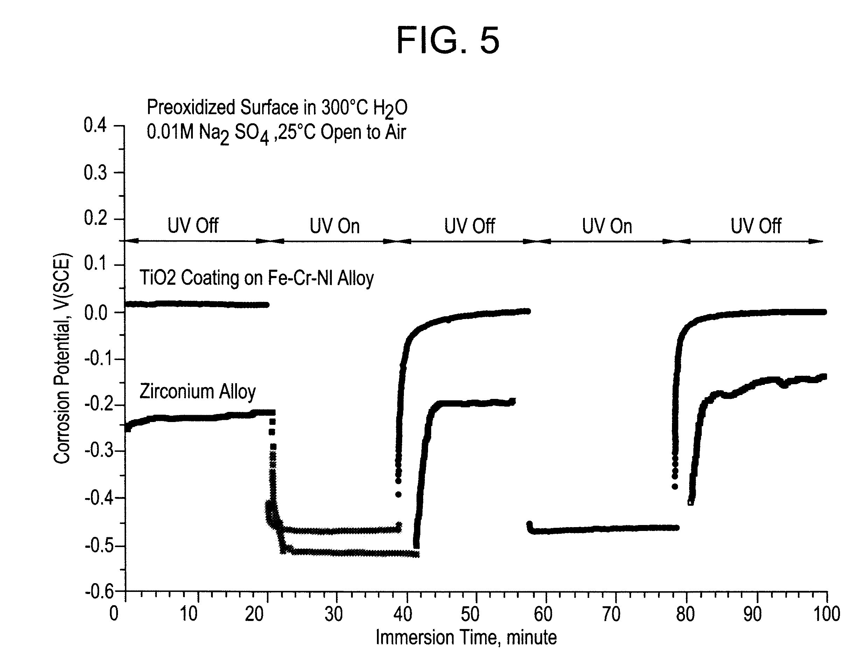

As shown in FIG. 4, the electrochemical corrosion potential of 304 SS may be reduced by forming a Zircaloy-2 layer on the surface thereof. The coated 304 SS shows a decrease in potential from approximately -400 to 200 mV (shown in FIG. 3) to approximately -470 to -380 mV (shown in FIG. 5) depending on the oxygen concentration. By coating the 304 SS component with a thin layer of Zircaloy-2, the ECP decreased and the difference between the coated 304 SS component and an adjacent Zircaloy-2 component would also decrease thereby reducing the corrosion of the Zircaloy-2 component (shown in FIG. 4). Thus, the coating of Zr-based alloys, e.g., Zircaloy 2, on Fe-based alloy (e.g., 304 SS) or Ni-based alloy (e.g., Alloy X750) restricts the oxygen oxidation reaction and decreases the ECP close to values of Zircaloy 2.

FIG. 5 further illustrates the decrease in the ECP difference between a non-zirconium alloy component coated with a thin material layer and a zirconium alloy component, by showing a comparison of the corrosion potential behavior. FIG. 5 illustrates the corrosion potential behavior of a TiO2 coated Fe-Cr-Ni alloy component (produced by CVD) and a zirconium alloy component with and without UV illumination in 0.01M Na₂SO₄ solution at 25°C. The UV illumination is used to simulate in reactor processing. For the experiment illustrated, both components were pre-oxidized in 300°C water containing 500 ppb 02 before the UV illumination. As FIG. 5 shows, the electrically non-conducting oxide film prevents and/or greatly restricts mass transport of oxidants to the component's metal surface causing the ECP to shift to a low value even at high oxidants levels during UV illumination.

Although example embodiment fuel assembly components may be inserted into BWR-type fuel rods and fuel bundles in example embodiments, it is understood that other types of fuel and power plants may be useable with example embodiment retention devices. For example, PWR, CANDU, RBMK, ESBWR, etc. type reactors may include fuel rods that can accommodate example embodiment retention devices in order to irradiate irradiation targets therein.

Example embodiments thus being described, it will be appreciated by one skilled in the art that example embodiments may be varied through routine experimentation and without further inventive activity within the scope of the appended claims. For example, other fuel types, shapes, and configurations may be used in conjunction with example embodiment fuel bundles and tie plate attachments.

## Claims

1. A nuclear reactor, comprising:
a first component (20) being formed of at least one material selected from nickel based alloys and iron based alloys;
a second component adjacent to the first component (20) the second component being formed of a zirconium alloy; and
a material layer (300) formed on at least one surface of the first component (20) the material layer (300) being formed of a different material than the first component (20) such that a difference in electrochemical corrosion potential between the first component (20) and the second component is reduced, wherein the material layer (300) is selected from one of titanium, zirconium, hafnium, yttrium, scandium, alloys thereof, and oxides thereof; and
a buffer layer (310) formed between the at least one surface of the first component (20) and the material layer (300);
**characterized by** the buffer layer (310) including at least one of tantalum, tantalum oxide, and tantalum alloys.

2. The nuclear reactor of claim 1, wherein the first component (20) is one of, a control blade, a spacer, a spring, an upper tie plate, and a lower tie plate.

3. The nuclear reactor of claim 1 or claim 2, wherein the zirconium alloys include, Zircaloy-2, Zircaloy-4, Zr-Sn alloys, Zr-Sn-Fe-Cr-Ni alloys, Zr-Sn-Fe-Cr alloys, and Zr-Nb alloys.

4. A method of enhancing zirconium corrosion resistance in a nuclear reactor fuel assembly, comprising:
forming a material laxer (300) on at least one surface of a first component (20) adjacent to a second component, such that a difference in electrochemical potential between the first component (20) and the second component is reduced, wherein the material layer (300) is selected from one of titanium, zirconium, hafnium, yttrium, scandium, alloys thereof, and oxides thereof; and
forming a buffer layer (310) between the at least one surface of the first component (20) and the material layer (300), wherein the buffer layer (310) includes at least one of tantalum, tantalum oxide, and tantalum alloys.

5. The method of claim 4, wherein the zirconium alloys include, Zircaloy-2, Zircaloy-4, Zr-Sn alloys, Zr-Sn-Fe-Cr-Ni alloys, Zr-Sn-Fe-Cr alloys, and Zr-Nb alloys.

6. The method of claim 4 or claim 5, wherein the first component (20) is formed of at least one material selected from nickel based alloys and iron based alloys.

7. The method of claim 4, wherein forming a material layer (300) coating step includes depositing the material layer (300) by at least one of the following methods, chemical vapor deposition (CVD), plasma vapor deposition (PVD), plasma enhanced chemical vapor deposition (PECVD), plasma thermal spray, high-velocity oxy-fuel (HVOF) thermal spray, wire arc, electroless deposition, and electroplating.

8. The method of claim 4, wherein the coating step includes implanting the at least one surface of the first component (20) by ion implantation.

9. The method of claim 8, wherein the implanting step includes implanting the at least one surface of the first component (20) using at least one ion source including, Zr, Ti, Hf, and Sc.

## Patentansprüche

1. Kernreaktor, der Folgendes umfasst:
ein erstes Bauteil (20), das aus wenigstens einem Werkstoff, ausgewählt aus nickelbasierten Legierungen und eisenbasierten Legierungen, geformt ist,
ein zweites Bauteil, angrenzend an das erste Bauteil (20), wobei das zweite Bauteil aus einer Zirkoniumlegierung geformt ist, und
eine Werkstoffschicht (300), die auf wenigstens einer Fläche des ersten Bauteils (20) geformt ist, wobei die Werkstoffschicht (300) aus einem anderen Werkstoff geformt ist als das erste Bauteil (20) derart, dass ein Unterschied bei dem elektrochemischen Korrosionspotential zwischen dem ersten Bauteil (20) und dem zweiten Bauteil verringert wird, wobei die Werkstoffschicht (300) ausgewählt ist aus einem von Titan, Zirkonium, Hafnium, Yttrium, Scandium, Legierungen derselben und Oxiden derselben, und
eine Pufferschicht (310), die zwischen der wenigstens einen Fläche des ersten Bauteils (20) und der Werkstoffschicht (300) geformt ist,
**dadurch gekennzeichnet, dass** die Pufferschicht (310) wenigstens eines von Tantal, Tantaloxid und Tantallegierungen einschließt.

2. Kernreaktor nach Anspruch 1, wobei das erste Bauteil (20) eines von einem Steuerblatt, einem Abstandshalter, einer Feder, einer oberen Verbindungsplatte und einer unteren Verbindungsplatte ist.

3. Kernreaktor nach Anspruch 1 oder Anspruch 2, wobei die Zirkoniumlegierungen Zircaloy-2, Zircaloy-4, Zr-Sn-Legierungen, Zr-Sn-Fe-Cr-Ni-Legierungen, Zr-Sn-Fe-Cr-Legierungen und Zr-Nb-Legierungen einschließen.

4. Verfahren zum Verbessern der Zirkonium-Korrosionsbeständigkeit in einer Kernreaktor-Brennstoffbaugruppe, das Folgendes umfasst:
das Formen einer Werkstoffschicht (300) auf wenigstens einer Fläche eines ersten Bauteils (20), angrenzend an ein zweites Bauteil derart, dass ein Unterschied bei dem elektrochemischen Potential zwischen dem ersten Bauteil (20) und dem zweiten Bauteil verringert wird, wobei die Werkstoffschicht (300) ausgewählt ist aus einem von Titan, Zirkonium, Hafnium, Yttrium, Scandium, Legierungen derselben und Oxiden derselben, und
das Formen einer Pufferschicht (310) zwischen der wenigstens einen Fläche des ersten Bauteils (20) und der Werkstoffschicht (300), wobei die Pufferschicht (310) wenigstens eines von Tantal, Tantaloxid und Tantallegierungen einschließt.

5. Verfahren nach Anspruch 4, wobei die Zirkoniumlegierungen Zircaloy-2, Zircaloy-4, Zr-Sn-Legierungen, Zr-Sn-Fe-Cr-Ni-Legierungen, Zr-Sn-Fe-Cr-Legierungen und Zr-Nb-Legierungen einschließen.

6. Verfahren nach Anspruch 4 oder Anspruch 5, wobei das erste Bauteil (20) aus wenigstens einem Werkstoff, ausgewählt aus nickelbasierten Legierungen und eisenbasierten Legierungen, geformt ist.

7. Verfahren nach Anspruch 4, wobei der Beschichtungsschritt zum Formen einer Werkstoffschicht (300) das Aufbringen der Werkstoffschicht (300) durch wenigstens eines der folgenden Verfahren einschließt: chemische Gasphasenabscheidung (chemical vapor deposition - CVD), Plasma-Gasphasenabscheidung (plasma vapor deposition - PVD), plasmagestützte chemische Gasphasenabscheidung (plasma enhanced chemical vapor deposition - PECVD), thermisches Plasmaspritzen, thermisches Hochgeschwindigkeitsflammspritzen (high-velocity oxy-fuel - HVOF), Drahtlichtbogen, stromlose Abscheidung und Galvanisieren.

8. Verfahren nach Anspruch 4, wobei der Beschichtungsschritt das Implantieren der wenigstens einen Fläche des ersten Bauteils (20) durch Ionenimplantation einschließt.

9. Verfahren nach Anspruch 8, wobei der Beschichtungsschritt das Implantieren der wenigstens einen Fläche des ersten Bauteils (20) unter Verwendung wenigstens einer Ionenquelle einschließt, die Zr, Ti, Hf und Sc einschließt.

## Revendications

1. Un réacteur nucléaire, comprenant :
un premier composant (20) étant formé d'au moins un matériau sélectionné parmi des alliages à base de nickel et des alliages à base de fer ;
un second composant adjacent au premier composant (20) le second composant étant formé d'un alliage de zirconium ; et
une couche de matériau (300) formée sur au moins une surface du premier composant (20) la couche de matériau (300) étant formée d'un matériau différent de celui du premier composant (20) de telle façon qu'une différence de potentiel de corrosion électrochimique entre le premier composant (20) et le second composant soit réduite, dans lequel la couche de matériau (300) est sélectionnée parmi l'un du titane, du zirconium, de l'hafnium, de l'yttrium, du scandium, des alliages de ceux-ci, et des oxydes de ceux-ci ; et
une couche tampon (310) formée entre l'au moins une surface du premier composant (20) et la couche de matériau (300) ;
**caractérisé par** la couche tampon (310) incluant au moins un du tantale, de l'oxyde de tantale, et des alliages de tantale.

2. Le réacteur nucléaire de la revendication 1, dans lequel le premier composant (20) est un de, une barre de contrôle, une entretoise, un ressort, une plaque d'attache supérieure, et une plaque d'attache inférieure.

3. Le réacteur nucléaire de la revendication 1 ou la revendication 2, dans lequel les alliages de zirconium incluent, du Zircaloy-2, du Zircaloy-4, des alliages de Zr-Sn, des alliages de Zr-Sn-Fe-Cr-Ni, des alliages de Zr-Sn-Fe-Cr, et des alliages de Zr-Nb.

4. Une méthode pour améliorer une résistance à la corrosion du zirconium dans un assemblage combustible de réacteur nucléaire, comprenant de :
former une couche de matériau (300) sur au moins une surface d'un premier composant (20) adjacent à un second composant, de telle façon qu'une différence de potentiel électrochimique entre le premier composant (20) et le seconde composant soit réduite, dans laquelle la couche de matériau (300) est sélectionnée parmi l'un du titane, du zirconium, de l'hafnium, de l'yttrium, du scandium, des alliages de ceux-ci, et des oxydes de ceux-ci ; et
former une couche tampon (310) entre l'au moins une surface du premier composant (20) et la couche de matériau (300), dans laquelle la couche tampon (310) inclut au moins un du tantale, de l'oxyde de tantale, et des alliages de tantale.

5. La méthode de la revendication 4, dans laquelle les alliages de zirconium incluent du Zircaloy-2, du Zircaloy-4, des alliages de Zr-Sn, des alliages de Zr-Sn-Fe-Cr-Ni, des alliages de Zr-Sn-Fe-Cr, et des alliages de Zr-Nb.

6. La méthode de la revendication 4 ou la revendication 5, dans laquelle le premier composant (20) est formé d'au moins un matériau sélectionné parmi des alliages à base de nickel et des alliages à base de fer.

7. La méthode de la revendication 4, dans laquelle l'étape de former un revêtement de couche de matériau (300) inclut de déposer la couche de matériau (300) par au moins une des méthodes suivantes, un dépôt chimique en phase vapeur (CVD), un dépôt en phase vapeur par plasma (PVD), un dépôt chimique en phase vapeur assisté par plasma (PECVD), une pulvérisation thermique par plasma, une pulvérisation thermique d'oxy-combustibles à vitesse élevée (HVOF), à l'arc à partir de fils, un dépôt non électrolytique, et une galvanoplastie.

8. La méthode de la revendication 4, dans laquelle l'étape de revêtement inclut d'implanter l'au moins une surface du premier composant (20) par implantation d'ions.

9. La méthode de la revendication 8, dans laquelle l'étape d'implantation inclut d'implanter l'au moins une surface du premier composant (20) en utilisant au moins une source d'ions incluant Zr, Ti, Hf et Sc.
